# EUROPÄISCHE PATENTSCHRIFT

(11) **EP 2 799 266 B1**
(45) Veröffentlichungstag und Bekanntmachung des Hinweises auf die Patenterteilung: **31.05.2017**
(21) Anmeldenummer: 14162477.5
(22) Anmeldetag: 28.03.2014
(51) Int. Cl.: B60J 5/14, E06B 3/48

(54) **Sektionaltor und Verfahren zum Auswechseln eines Paneels eines Sektionaltores**
Sectional door and method for replacing a panel of a sectional door
Porte sectionnelle et procédé de remplacement d'un panneau d'une porte sectionnelle

(30) Priorität: 03.05.2013 DE 102013104551
(43) Veröffentlichungstag der Anmeldung: 05.11.2014
(73) Patentinhaber: WIHAG Fahrzeugbausysteme GmbH, 33602 Bielefeld (DE)
(72) Erfinder: Werth, Mario, 32120 Hiddenhausen (DE)
(74) Vertreter: Dantz, Jan Henning

(56) Entgegenhaltungen:
- EP-A2- 1 714 815

## Beschreibung

Die vorliegende Erfindung betrifft ein Sektionaltor, insbesondere für Nutzfahrzeuge, nach dem Oberbegriff des Anspruches 1, sowie ein Verfahren zum Auswechseln eines Paneels eines Sektionaltores.

Die EP 860 574 B1 offenbart ein Sektionaltor, das aus einer Vielzahl von Lamellenkörpern gebildet ist, die über integral ausgebildete Streifen gelenkig miteinander verbunden sind. Durch diese Ausgestaltung sind die Lamellenkörper zusammenhängend ausgeführt, so dass bei einer Beschädigung eines Lamellenkörpers der gesamte Lamellenbehang ausgewechselt werden muss.

Es sind auch Sektionaltore bekannt, bei denen die einzelnen Paneele über Scharnierelemente, wie Haken und entsprechende Aufnahmen, gelenkig miteinander verbunden sind. Wird ein solches Paneel beschädigt, besteht das Problem, dass das Torblatt in eine Öffnungsposition verfahren wird und dann sämtliche Paneele bis zum beschädigten Paneel ausgebaut werden müssen. Nach der Demontage der einzelnen Paneele kann dann das beschädigte Paneel getauscht und das Torblatt wieder zusammengesetzt werden. Dies ist mit einem erheblichen Montageaufwand verbunden.

Die EP 1 714 815 offenbart ein Fahrzeugrolltor, bei dem die einzelnen Lamellen über Scharniergelenke aneinander gehalten sind. Jedes Scharniergelenk umfasst zwei Scharnierteile und jedes Scharnierteil ist mit einer Lamelle verschraubt. Zum Auswechseln einzelner Paneele werden die Schrauben gelöst, um dann die Lamelle aus dem Lamellenbehang nach weiteren Schritten zur Demontage entfernen zu können. EP 1 714 815 A2 offenbart dabei alle Merkmale des Oberbegriffs des Anspruchs 1. Es ist daher Aufgabe der vorliegenden Erfindung, ein Sektionaltor und ein Verfahren zum Auswechseln einzelner Paneele eines Sektionaltores zu schaffen, die bei einer Beschädigung einzelner Paneele des Sektionaltores ein einfaches Auswechseln der beschädigten Paneele ermöglichen.

Diese Aufgabe wird mit einem Sektionaltor mit den Merkmalen des Anspruches 1, sowie einem Verfahren zum Auswechseln einzelner Paneele eines Sektionaltores mit den Merkmalen des Anspruches 10 gelöst.

Erfindungsgemäß umfasst das Sektionaltor mindestens ein Paneel, dass mehrteilig ausgebildet ist und im geschlossenem Zustand auswechselbar ist. Dadurch kann bei einer Beschädigung dieses Paneels das Sektionaltores bei einem Auswechselvorgang in einer geschlossenen Position verbleiben, so dass lediglich das beschädigte Paneel getauscht wird und das Sektionaltor nur kurze Zeit außer Betrieb bleiben muss. Dadurch werden die Montagzeigen erheblich verkürzt.

Das Paneel weist ein erstes Profil auf, das von einem zweiten Profil abnehmbar ist. Dadurch kann das Paneel in einer Ebene geteilt werden, um dann die einzelnen Profile von dem Torblatt zu entfernen. Dabei ist mindestens ein Verriegelungsteil vorgesehen, um das erste Profil mit dem zweiten Profil zu verriegeln oder zu verbinden.

Bei einem Paneel ist vorzugsweise an dem ersten Profil ein Haken oder eine Aufnahme für einen Haken ausgebildet und zudem ist an dem zweiten Profil ein Haken oder eine Aufnahme für einen Haken ausgebildet. Dadurch stellt das erste Profil eine erste Verbindung zu einem benachbarten Paneel über den Haken oder die Aufnahme her, während das zweite Profil eine zweite Verbindung zu einem benachbarten Paneel über den Haken oder eine Aufnahme für einen solchen Haken herstellt. Beim Auswechseln der Paneele wird dann jeweils ein Profil von einem benachbarten Paneel entfernt, was den Vorgang der Demontage und der Montage erheblich vereinfacht.

Das mindestens eine Verriegelungsteil verhindert vorzugsweise ein Anheben des ersten Profils von dem zweiten Profil im verbundenen Zustand, also eine Bewegung parallel zur Führungsrichtung des Torblattes. Dadurch kann nach dem Lösen des Verbindungsprofils ein geringfügiges Anheben des ersten Profils von dem zweiten Profil erfolgen, so dass diese auf einfache Weise voneinander getrennt werden können. Das Verriegelungsteil ist dabei verschwenkbar oder steckbar mit dem ersten und/oder dem zweiten Profil verbunden. Für eine einfache Montage oder Demontage des Verriegelungsteils ist dieses über Rastmittel an dem ersten oder zweiten Profil festlegbar. Das Verriegelungsteil kann auch als Verbindungsprofil ausgebildet sein, das sich im Wesentlichen über die gesamte Breite der Paneele erstreckt, so dass über das Verbindungsprofil auch ausreichend Kräfte bei einer Bewegung des Torblattes übertragen werden können.

Für eine optisch ansprechende Gestaltung kann das erste Profil oder das zweite Profil sich an einer Außenseite des Torblattes im Wesentlichen über die gesamte Höhe zwischen zwei benachbarten Paneelen erstrecken. Dadurch ist keine Teilung der Paneele in das erste oder in das zweite Profil von einer Außenseite sichtbar, was auch einen Einbruchsschutz verbessert.

Für eine stabile Ausgestaltung des Torblattes können das erste und/oder das zweite Profil aus einem extrudierten oder stranggepressten Profil aus Kunststoff oder Metall hergestellt sein. Das Torblatt kann eine oder mehrere Paneele aufweisen, die mehrteilig ausgebildet sind und auf einfache Weise ausgewechselt werden können. Vorzugsweise besteht das Torblatt im Wesentlichen vollständig aus Paneelen, die mehrteilig hergestellt sind und einfach ausgewechselt werden können.

Das erfindungsgemäße Sektionaltor wird bei einem Nutzfahrzeug eingesetzt, um vorzugsweise einen Laderaum zu verschließen. Dabei erfolgt das Lösen des mindestens einen Verriegelungsteils eines mehrteiligen Profils vorzugsweise von einem Innenraum des Nutzfahrzeuges, so dass bei geschlossenem Sektionaltor ein Einbruchsschutz gegeben ist.

Das erfindungsgemäße Verfahren zum Auswechseln einzelner Paneele eines Sektionaltores umfasst die Verfahrensschritte des Anspruches 10. Dabei wird zunächst das mindestens eine Verriegelungsteil von einem Paneel gelöst, um dann ein erstes Profil des Paneels von einem zweiten Profil abnehmen zu können. Davor oder danach wird mindestens eine seitliche Führung des Paneels gelöst, die beispielsweise aus einem seitlich hervorstehenden Vorsprung oder einer Rolle bestehen kann, die dann vom jeweiligen Paneel demontiert wird.

Für eine möglichst einfache Demontage kann das Torblatt nach dem Lösen des Verriegelungsteils geringfügig angehoben werden, damit das erste Profil und das zweite Profil beabstandet voneinander positioniert werden und dann jeweils von dem benachbarten Paneelen getrennt werden können. Bei der Montage der neuen Paneele werden ebenfalls die einzelnen Profile zunächst an den benachbarten Paneelen montiert, um dann durch Absenken des Torblattes das erste und das zweite Profil wieder formschlüssig aneinander anzuordnen und über mindestens ein Verbindungsteil miteinander zu verbinden.

Die Erfindung wird nachfolgend anhand eines Ausführungsbeispiels mit Bezug auf die beigefügten Zeichnungen näher erläutert. Es zeigen:

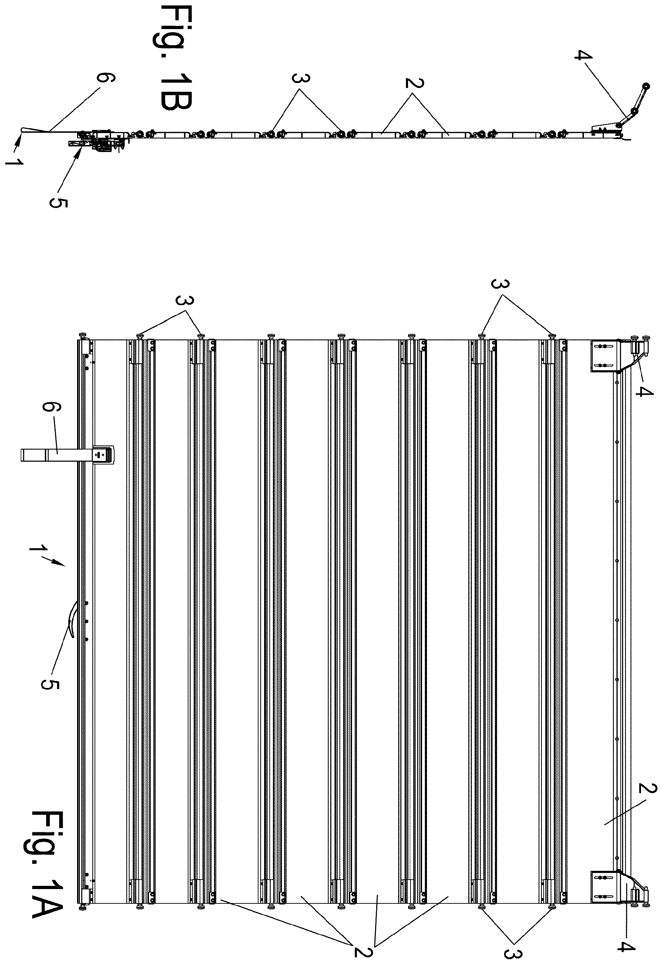

- Figuren 1A und 1B: zwei Ansichten eines Torblattes eines erfindungsgemäßen Sektionaltores;
- Figuren 2A und 2B: zwei Ansichten eines Paneels des Torblattes der Figur 1A;
- Figur 3: eine Ansicht des ersten Profils des Paneels der Figur 2;
- Figur 4: eine Ansicht des zweiten Profils des Paneels der Figur 2, und
- Figur 5: eine Ansicht des Verriegelungsteils des Paneels der Figur 2.

Ein Sektionaltor umfasst ein Torblatt 1, dass aus einer Vielzahl von Paneelen 2 gebildet ist. An jedem Paneel 2 sind an gegenüberliegenden Seiten hervorstehende Führungsmittel 3 in Form von Rollen oder Zapfen montiert, die in einer nicht dargestellten C-förmigen Schiene verfahrbar sind. Die C-förmige Schiene kann dabei gebogen sein und das Sektionaltor beispielsweise vom rückseitigen Bereich eines Nutzfahrzeuges in einen Deckenbereich eines Laderaumes führen. Das Sektionaltor weist am oberen Bereich Führungsmittel 4 auf und ist im unteren Bereich mit einer Verschlussvorrichtung 5 sowie einem Zugmittel 6 versehen.

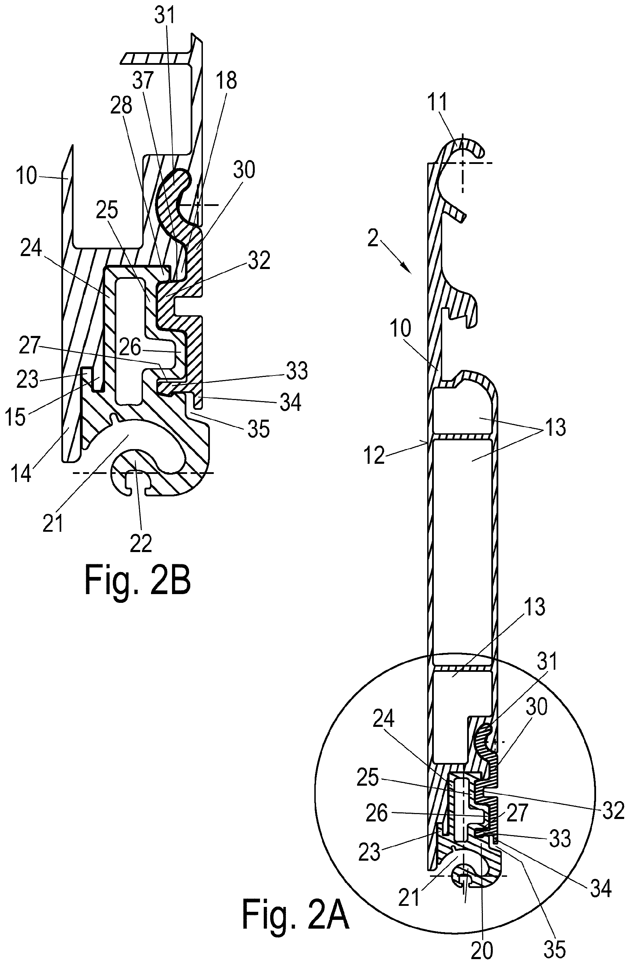

Ein Paneel 2 des Torblattes 1 ist im Detail in den Figuren 2A und 2B gezeigt. Jedes Paneel 2 ist mehrteilig ausgebildet und umfasst ein erstes Profil 10 sowie ein zweites Profil 20. Die Profile 10 und 20 können aus einem extrudierten oder stranggepressten Profil aus Kunststoff oder Metall hergestellt sein, aber auch andere Materialien können eingesetzt werden.

Das erste Profil 10 umfasst an der Oberseite einen gebogenen Haken 11, der in eine Aufnahme eines darüber angeordneten Paneels 2 eingreift, so dass das erste Profil 10 an dem darüber angeordneten Paneel gehalten wird. Das erste Profil 10 umfasst ferner eine äußere Oberfläche 12, die sich von dem oberen Bereich mit dem Haken 11 zu einem unteren Bereich erstreckt und die sichtbare Außenseite des Torblattes 1 bildet, die nur im Schwenkbereich unterbrochen ist. Das erste Profil 10 umfasst ferner Hohlkammern 13 sowie eine Aufnahme zum Einfügen des zweiten Profils 20.

Das zweite Profil 20 umfasst am unteren Bereich eine bogenförmige Aufnahme 21, in die ein Haken 11 eines benachbarten Paneels 2 eingefügt werden kann. Dadurch ist das zweite Profil 20 verschwenkbar mit dem darunter liegenden Paneel verbunden. An der bogenförmigen Aufnahme 21 ist ein unterer Halteabschnitt 22 zum Einhängen eines Hakens 11 des benachbarten Paneels vorgesehen.

Wie insbesondere die Figur 2B zeigt, umfasst das zweite Profil 20 einen vertikal ausgerichteten Steg 23, der in eine nutförmige Aufnahme an dem ersten Profil 10 eingreift, die durch die nach unten gerichteten Stege 14 und 15 gebildet ist, wobei der Steg 14 einen äußeren Abschlusssteg bildet. Ferner besitzt das zweite Profil eine vertikale Wandung 24, die wiederum an einer benachbarten Wand des ersten Profils 10 anliegt. Dadurch kann das zweite Profil 20 von unten in das erste Profil 10 eingesteckt werden, allerdings wird eine Montage in horizontale Richtung durch die Stege 23 und 15 sowie die Stege 18 und 28 verhindert.

An dem Übergang zwischen dem ersten Profil 10 und dem zweiten Profil 20 ist an einer Innenseite ein Verriegelungsteil 30 vorgesehen, und sich im Wesentlichen über die gesamte Breite eines Paneels 2 erstreckt. Das Verriegelungsteil 30 umfasst einen oberen Haken 31, der in eine Aufnahme an dem ersten Profil 10 einschwenkbar ist. Das Verriegelungsteil 30 umfasst ferner einen nach innen gerichteten Vorsprung 32, an dessen Oberseite 37 ein horizontaler Steg 28 des zweiten Profils 20 sowie ein Steg 18 des ersten Profils 10 aufliegt.

An dem Verriegelungsteil 30 ist ferner ein Rastmittel 33 in Form eines Raststeges mit einem Rastvorsprung 36 ausgebildet, der in eine Rastaufnahme 27 an dem zweiten Profil 20 eingreift. Unterhalb des Rastmittels 33 ist ein Betätigungsabschnitt 34 vorgesehen, unter dem ein Eingriffsspalt 35 zwischen dem zweiten Profil 20 und dem Betätigungsabschnitt 34 ausgebildet ist.

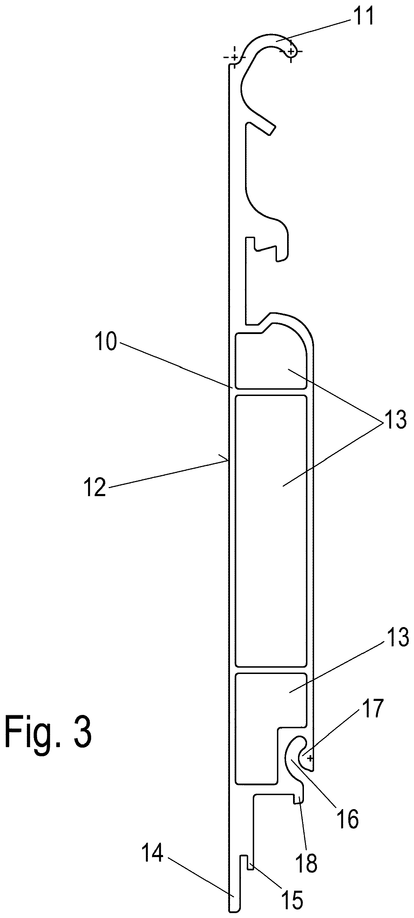

Das erste Profil 10 ist im Detail in Figur 3 dargestellt. An einer Außenseite ist eine Oberfläche 12 ausgebildet, die sich von dem oberen Haken 11 bis zu dem Abschlusssteg 14 erstreckt, so dass von der Außenseite kein Übergang zwischen dem ersten und zweiten Profil sichtbar ist. Auf der Innenseite ist an dem ersten Profil 10 eine bogenförmige Aufnahme 16 zum Einschwenken des Hakens 31 des Verriegelungsteils 30 ausgebildet. Der Haken 31 wird durch einen wulstförmigen Vorsprung 17 an dem ersten Profil 10 hintergriffen.

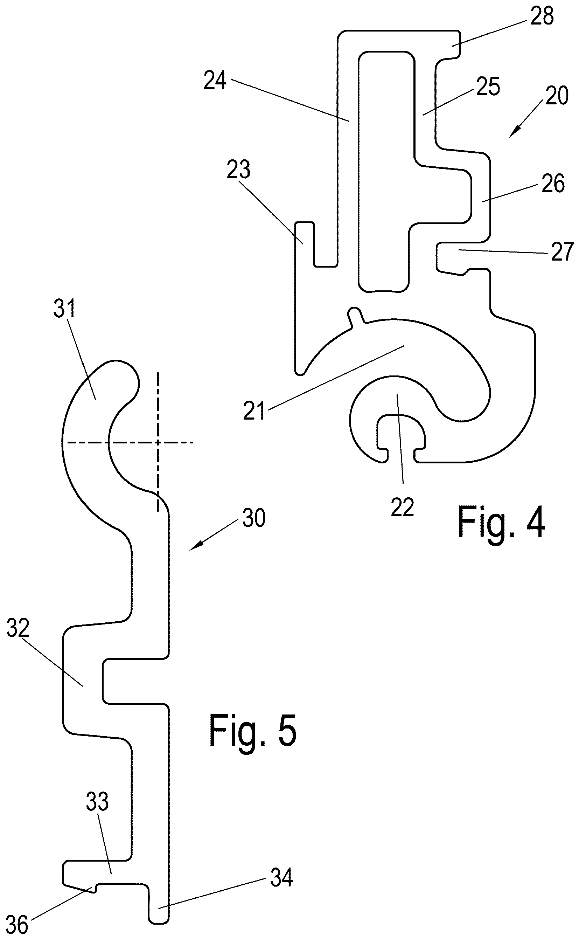

In Figur 4 ist das zweite Profil 20 im Detail dargestellt. An der Unterseite ist die bogenförmige Aufnahme 21 für die Aufnahme eines Hakens 11 eines benachbarten Paneels 2 ausgebildet. Auf der Innenseite besitzt das zweite Profil 20 eine Profilierung mit einer Rastaufnahme 27, dem horizontalen Vorsprung 26 und einem Steg 28 zur formschlüssigen Aufnahme des Verriegelungsteils 30. Auf der Außenseite ist der vertikale Stege 23 und die Wandung 24 ausgebildet, an denen Wandabschnitte des ersten Profils 10 anliegen bzw. hintergreifen.

In Figur 5 ist das Verriegelungsteil 30 im Detail dargestellt. Das Verriegelungsteil 30 weist einen oberen Haken 31 sowie im unteren Bereich Rastmittel 33 auf. Im mittleren Bereich ist ein horizontaler Vorsprung 32 vorgesehen, der zur Kraftübertragung von dem zweiten Profil 20 auf das erste Profil 10 dient.

Wird das Torblatt 1 angehoben, verhindert das Verriegelungsteil 30, dass sich das erste Profil 10 von dem zweiten Profil 20 in vertikale Richtung lösen kann. Hierfür wird der Haken 31 fest in der bogenförmigen Aufnahme 16 gehalten und zieht über den horizontalen Vorsprung 32 und den Steg 28 des zweite Profils 20 nach oben. Insofern können sowohl Zugkräfte als auch Druckkräfte zwischen benachbarten Paneelen 2 in mehrteiliger Ausbildung übertragen werden.

Wird nun eines der Paneele 2 beschädigt, beispielsweise beim Be- und Entladen eines Laderaums eines Nutzfahrzeuges, kann das beschädigte Paneel 2 auf einfache Weise ausgewechselt werden. Hierfür wird zunächst das Verriegelungsteil 30 entriegelt und der Haken 31 aus der bogenförmigen Aufnahme 16 herausgeschwenkt. Nach dem Lösen des Verriegelungsteils 30 kann das obere Profil 10 von dem unteren Profil 20 geringfügig angehoben werden, was auch über den motorischen Antrieb des Torblattes 1 erfolgen kann. Anschließend können die seitlichen Führungen 3 an dem ersten Profil 10 und/oder dem zweiten Profil 20 demontiert werden, so dass das erste Profil 10 sowohl aus den seitlichen Führungen als auch durch Herausschwenken des Hakens 11 aus einer Aufnahme 21 eines benachbarten Paneels herausgeschwenkt werden kann. Gleichermaßen kann das zweite Profil 20 von der benachbarten Paneel 2 entfernt werden, indem die bogenförmige Aufnahme 21 von dem Haken 11 getrennt wird, nachdem die seitlichen Führungen 3 entfernt wurden. Die Reihenfolge der Verfahrensschritte ist dabei nicht relevant, da beispielsweise auch die seitlichen Führungen 3 in einem ersten Schritt entfernt werden können, bevor das Verriegelungsteil 30 entfernt wird, um die Profile 10 und 20 voneinander zu trennen.

Für die Montage eines neuen Paneels 2 wird dann das erste Profil 10 mit einer benachbarten Paneel 2 verbunden, indem der Haken 11 in eine entsprechende Aufnahme 21 eingeschwenkt wird. Ferner wird das zweite Profil 20 an dem benachbarten Paneel festgelegt, indem die bogenförmige Aufnahme 21 an einem Haken 11 eingeschwenkt wird, um dann die seitlichen Führungen 3 an dem ersten Profil 10 und/oder dem zweiten Profil 20 zu montieren. Zudem wird dann das erste Profil 10 auf das zweite Profil 20 abgesenkt, so dass der Steg 23 in die nutförmige Aufnahme zwischen dem Steg 15 und der Abschlusssteg 14 eingreift. Sobald das erste Profil 10 und das zweite Profil 20 formschlüssig aneinander anliegen, kann das Verriegelungsteil 30 an dem ersten Profil 10 eingeschwenkt und an dem zweiten Profil 20 verrastet werden.

In dem dargestellten Ausführungsbeispiel ist das erste Profil 10 im oberen Bereich eines Paneels 2 angeordnet, während das zweite Profil 20 im unteren Bereich vorgesehen ist. Es ist natürlich möglich, das Paneel 2 um 180° zu drehen, so dass das untere Profil 20 an einer Oberseite eines Paneels 2 angeordnet ist.

Zudem ist es möglich, die Form des ersten Profils 10 und des zweiten Profils 20 abzuwandeln, um die Profile 10 und 20 mechanisch auf andere Weise miteinander verbinden zu können. Das Verriegelungsteil 30 ist in dem gezeigten Ausführungsbeispiel als leistenförmiges Verbindungsprofil ausgebildet.

Es ist auch möglich, ein oder mehrere Verriegelungsteile oder Verbindungsprofile vorzusehen, die deutlich kürzer ausgebildet sind. Beispielsweise können über die Breite eines Paneels 2 mehrere einzelne Verbindungsprofile montiert sein.

Auch die Länge des ersten Profils 10 und des zweiten Profils 20 kann unterschiedlich sein. Ferner können die Profile 10 und/oder 20 statt einteilig auch mehrteilig ausgebildet sein. Zudem können die Profile 10 oder 20 statt einteilig sich über die gesamte Länge der Paneele 2 zu erstrecken auch in mehreren Profilabschnitten angeordnet sein.

### Bezugszeichenliste

- 1: Torblatt
- 2: Paneel
- 3: Führungsmittel
- 4: Führungsmittel
- 5: Verschlussvorrichtung
- 6: Zugmittel
- 10: Profil
- 11: Haken
- 12: Oberfläche
- 13: Hohlkammer
- 14: Abschlusssteg
- 15: Steg
- 16: Aufnahme
- 17: Vorsprung
- 18: Steg
- 20: Profil
- 21: Aufnahme
- 22: Halteabschnitt
- 23: Steg
- 24: Steg
- 26: Vorsprung
- 27: Rastaufnahme
- 28: Steg
- 30: Verriegelungsteil
- 31: Haken
- 32: Vorsprung
- 33: Rastmittel
- 34: Betätigungsabschnitt
- 35: Eingriffsspalt
- 36: Rastvorsprung
- 37: Oberseite

## Patentansprüche

1. Sektionaltor, insbesondere für Nutzfahrzeuge, mit einem Torblatt (1) aus einer Vielzahl von Paneelen (2), die verschwenkbar aneinander gehalten sind und entlang mindestens einer seitlichen Führung bewegbar sind, wobei mindestens ein Paneel (2) mehrteilig ausgebildet ist und bei geschlossenem Torblatt (1) auswechselbar ist und das mindestens eine Paneel (2) ein erstes Profil (10) aufweist, das von einem zweiten Profil (20) abnehmbar ist und mindestens ein Verriegelungsteil (30) vorgesehen ist, um das erste Profil (10) an dem zweiten Profil (20) zu verriegeln, wobei das Verriegelungsteil (30) verschwenkbar oder steckbar mit dem ersten und/oder zweiten Profil (10, 20) verbindbar ist, **dadurch gekennzeichnet, dass** das mindestens eine Verriegelungsteil (30) über Rastmittel (27, 33) an dem ersten oder zweiten Profil (10, 20) festlegbar ist.

2. Sektionaltor nach Anspruch 1, **dadurch gekennzeichnet, dass** an dem ersten Profil (10) ein Haken (11) oder eine Aufnahme für einen Haken und an dem zweiten Profil (20) ein Haken oder eine Aufnahme (21) für einen Haken ausgebildet sind.

3. Sektionaltor nach Anspruch 1 oder 2, **dadurch gekennzeichnet, dass** das mindestens eine Verriegelungsteil (30) ein Anheben des ersten Profils (10) von dem zweiten Profil (20) im verbundenem Zustand verhindert.

4. Sektionaltor nach einem der vorhergehenden Ansprüche, **dadurch gekennzeichnet, dass** das Verriegelungsteil (30) als Verbindungsprofil ausgebildet ist, das sich im Wesentlichen über die gesamte Breite der Paneele (2) erstreckt.

5. Sektionaltor nach einem der vorhergehenden Ansprüche, **dadurch gekennzeichnet, dass** das erste Profil (10) eine äußere Oberfläche (12) umfasst, die sich von einem oberen Bereich mit einem Haken (11) zu einem unteren Bereich erstreckt und die sichtbare Außenseite eines Torblattes (1) bildet.

6. Sektionaltor nach einem der vorhergehenden Ansprüche, **dadurch gekennzeichnet, dass** das erste und/oder zweite Profil (10, 20) aus einem extrudierten oder stranggepressten Profil aus Kunststoff oder Metall hergestellt ist.

7. Sektionaltor nach einem der vorhergehenden Ansprüche, **dadurch gekennzeichnet, dass** jedes Paneel (2) an gegenüberliegenden Seiten an einer C-förmigen Schiene geführt ist.

8. Nutzfahrzeug, insbesondere LKW, das mit einem Sektionaltor nach einem der vorhergehenden Ansprüche ausgestattet ist.

9. Nutzfahrzeug nach Anspruch 8, **dadurch gekennzeichnet, dass** das Lösen des mindestens einen Verriegelungsteils (30) von einem Innenraum des Nutzfahrzeuges erfolgt.

10. Verfahren zum Auswechseln eines Paneels (2) eines Sektionaltores gemäß einem der Ansprüche 1-7, mit den folgenden Schritten:
- Lösen mindestens eines Verriegelungsteils (30) von einem Paneel (2);
- Abnehmen eines ersten Profils (10) des Paneels (2);
- Lösen mindestens einer seitlichen Führung;
- Abnehmen eines zweiten Profils (20) des Paneels (2), und
- Montage eines ersten und eines zweiten Profils (10, 20) und Verriegeln des ersten und des zweiten Profils (10, 20) über mindestens ein Verriegelungsteil (30) aneinander, wobei das Verriegelungsteil (30) an dem ersten oder zweiten Profil (10, 20) verrastet wird.

11. Verfahren nach Anspruch 10, **dadurch gekennzeichnet, dass** nach dem Lösen des mindestens einen Verriegelungsteils (30) das erste Profil (10) angehoben wird, um es von dem zweiten Profil (20) und danach von dem benachbarten Paneel (2) zu entfernen.

## Claims

1. A sectional door, especially for commercial vehicles, comprising a door leaf
(1) made from a plurality of panels (2), which are pivotably held together and are movable along at least one lateral guide, wherein at least one panel
(2) is formed in several parts and is exchangeable when the door leaf (1) is closed, and the at least one panel (2) comprises a first profile (10) which can be removed from a second profile (20), and at least one locking part (30) is provided in order to latch the first profile (10) on the second profile (20), wherein the locking part (30) is connectable in a pivotable or pluggable manner to the first and/or second profile (10, 20), **characterized in that** the at least one locking part (30) can be fixed via latching means (27, 33) to the first or second profile (10, 20).

2. A sectional door according to claim 1, **characterized in that** a hook (11) or a receiver for a hook is formed on the first profile (10), and a hook or a receiver (21) for a hook on the second profile (20).

3. A sectional door according to claim 1 or 2, **characterized in that** the at least one locking part (30) prevents lifting of the first profile (10) from the second profile (20) in the connected state.

4. A sectional door according to one of the preceding claims, **characterized in that** the locking part (30) is formed as a connecting profile which extends substantially over the entire width of the panels (2).

5. A sectional door according to one of the preceding claims, **characterized in that** the first profile (10) has an outer surface (12) which extends from an upper region with a hook (11) to a bottom region and forms the visible exterior side of a door leaf (1).

6. A sectional door according to one of the preceding claims, **characterized in that** the first and/or second profile (10, 20) is made from an extruded or extrusion-moulded profile made of plastic or metal.

7. A sectional door according to one of the preceding claims, **characterized in that** each panel (2) is guided on opposite sides on a C-shaped rail.

8. A commercial vehicle, especially truck, which is fitted with a sectional door according to one of the preceding claims.

9. A commercial vehicle according to claim 8, **characterized in that** the release of the at least one locking part (30) occurs from an interior space of the commercial vehicle.

10. A method for exchanging a panel (2) of a sectional door according to one of the claims 1 to 7, comprising the following steps:
- releasing at least one locking part (30) from a panel (2);
- removing the first profile (10) of the panel (2);
- releasing at least one lateral guide;
- removing a second profile (20) of the panel (2), and
- mounting of a first and a second profile (10, 20) and locking the first and second profile (10, 20) via at least one locking part (30) to each other, wherein the locking part (30) is latched onto the first or second profile (10, 20).

11. A method according to claim 10, **characterized in that** after the release of the at least one locking part (30) the first profile (10) is lifted in order to remove it from the second profile (20) and thereafter from the adjacent panel (2).

## Revendications

1. Porte sectionnelle, en particulier pour véhicules utilitaires, avec un vantail de porte (1) composé d'un grand nombre de panneaux (2) retenus de façon à pouvoir pivoter les uns par rapport aux autres et déplaçables le long d'au moins un guide latéral, dans laquelle au moins un panneau (2) est réalisé en plusieurs parties et peut être échangé quand le vantail de porte (1) est fermé et l'au moins un panneau (2) présente un premier profilé (10) qui peut être enlevé d'un deuxième profilé (20) et il est prévu au moins une partie de verrouillage (30) pour verrouiller le premier profilé (10) sur le deuxième profilé (20), la partie de verrouillage (30) étant reliée de façon pivotante ou emboîtable avec le premier profilé et/ou le deuxième (10, 20), **caractérisée en ce que** l'au moins une partie de verrouillage (30) peut être fixée par des moyens d'enclenchement (27, 33) sur le premier ou deuxième profilé (10, 20).

2. Porte sectionnelle selon la revendication 1, **caractérisée en ce qu'**est formé sur le premier profilé (10) un crochet (11) ou un réceptacle pour un crochet et sur le deuxième profilé (20) un crochet ou un réceptacle (21) pour un crochet.

3. Porte sectionnelle selon la revendication 1 ou 2, **caractérisée en ce que** l'au moins une partie de verrouillage (30) empêche de soulever le premier profilé (10) du deuxième profilé (20) dans l'état assemblé.

4. Porte sectionnelle selon l'une des revendications précédentes, **caractérisée en ce que** la partie de verrouillage (30) est réalisée comme un profilé de liaison qui s'étend sensiblement sur toute la largeur des panneaux (2).

5. Porte sectionnelle selon l'une des revendications précédentes, **caractérisée en ce que** le premier profilé (10) comprend une surface extérieure (12) qui s'étend d'une zone supérieure munie d'un crochet (11) à une zone inférieure et forme la face extérieure visible d'un vantail de porte (1).

6. Porte sectionnelle selon l'une des revendications précédentes, **caractérisée en ce que** le premier profilé et/ou le deuxième (10, 20) sont fabriqués à partir d'un profilé extrudé ou filé en plastique ou en métal.

7. Porte sectionnelle selon l'une des revendications précédentes, **caractérisée en ce que** chaque panneau (2) est guidé sur des côtés opposés sur un rail en forme de C.

8. Véhicule utilitaire, en particulier camion, équipé d'une porte sectionnelle selon l'une des revendications précédentes.

9. Véhicule utilitaire selon la revendication 8, **caractérisée en ce que** le détachement de l'au moins une partie de verrouillage (30) s'effectue par l'intérieur du véhicule utilitaire.

10. Procédé pour échanger un panneau (2) d'une porte sectionnelle selon l'une des revendications 1 à 7, comprenant les étapes suivantes :
- détachement d'au moins une partie de verrouillage (30) d'un panneau (2) ;
- retrait d'un premier profilé (10) du panneau (2) ;
- détachement d'au moins un guide latéral ;
- retrait d'un deuxième profilé (20) du panneau (2), et
- montage d'un premier profilé et d'un deuxième (10,20) et verrouillage du premier profilé et du deuxième (10, 20) l'un à l'autre par l'intermédiaire d'au moins une partie de verrouillage (30), la partie de verrouillage (30) étant emboîtée sur le premier profilé ou le deuxième (10, 20).

11. Procédé selon la revendication 10, **caractérisé en ce qu'**après le détachement de l'au moins une partie de verrouillage (30), le premier profilé (10) est soulevé afin de l'enlever du deuxième profilé (20), puis du panneau voisin (2).
